Europäisches Patentamt

European Patent Office

Office européen des brevets

(11) Veröffentlichungsnummer: **0 220 618**
**A2**

(12) # EUROPÄISCHE PATENTANMELDUNG

(21) Anmeldenummer: **86114336.0**

(22) Anmeldetag: **16.10.86**

(51) Int. Cl.⁴: **G01F 23/24** , G05D 7/06

(30) Priorität: **26.10.85 DE 3538181**

(43) Veröffentlichungstag der Anmeldung:
**06.05.87 Patentblatt 87/19**

(84) Benannte Vertragsstaaten:
**FR GB NL**

(71) Anmelder: **MESSER GRIESHEIM GMBH**
**Hanauer Landstrasse 330**
**D-6000 Frankfurt/Main 1(DE)**

(72) Erfinder: **Hettinger, Wolfgang**
**Am Frohnweiher 14**
**D-5000 Köln 71(DE)**

(54) **Vorrichtung zur automatischen Begrenzung des Füllstandes kryogener Flüssigkeiten.**

(57) Kryogene Flüssigkeiten werden durch manuelles Öffnen und Schließen von Ventilen umgefüllt. Zwecks Automatisierung des Umfüllvorganges mit Begrenzung des Füllstandes wird im Kryobehälter - (6) ein elektrisch beheizbarer Temperaturfühler (4) in Höhe des gewünschten Füllstandes angebracht. Sobald der Temperaturfühler in die kryogene Flüssigkeit eintaucht, ändert sich die von ihm erzeugte Spannung. Diese Spannungsänderung wird in einer elektronischen Schalteinheit umgesetzt in ein Signal zum Beenden des Füllvorganges. Die Vorrichtung kann dahingehend erweitert werden, daß nach dem manuell ausgelösten Abfüllvorgang die selbsttätige Fortsetzung desselben erst freigegeben wird, wenn der Temperaturfühler eine unter Raumtemperatur liegende Temperatur erreicht hat.

FIG.1

EP 0 220 618 A2

## Vorrichtung zur automatischen Begrenzung des Füllstandes kryogener Flüssigkeiten

Die Erfindung betrifft eine Vorrichtung zur automatischen Begrenzung des Füllstandes kryogener Flüssigkeiten nach dem Oberbegriff des Anspruches 1.

Kryogene Flüssigkeiten, wie z.B. flüssiger Stickstoff, müssen aus größeren Speicherbehältern oder Tankfahrzeugen in kleinere Kryobehälter umgefüllt werden. Derartige Umfüllvorgänge werden sowohl beim Verbraucher als auch beim Hersteller der kryogenen Flüssigkeit durchgeführt. Hierzu wird zwischen dem Speicher und dem Kryobehälter eine Schlauchverbindung hergestellt und nach dem manuellen Öffnen eines Absperrventiles der Kryobehälter gefüllt. Der Abfüllvorgang muß laufend überwacht werden, damit er durch Schließen des Absperrventiles beendet werden kann, sobald der Kryobehälter gefüllt ist.

Zur Überwachung der abgegebenen Menge dienen Durchlaufmesser, Waagen und auch eine einfache optische Überlaufkontrolle. Der Abfüllvorgang muß daher laufend durch qualifiziertes Personal beaufsichtigt werden, wodurch er teuer wird.

Der Erfindung liegt daher die Aufgabe zugrunde, eine Vorrichtung zu schaffen, welche den Füllstand automatisch auf eine vorgegebene Höhe begrenzt, so daß der gesamte Füllvorgang automatisiert und von ungeschultem Personal durchgeführt werden kann.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Eine vorteilhafte Weiterbildung der Erfindung ist im Unteranspruch angegeben.

Ein Ausführungsbeispiel der Erfindung soll anhand der beigefügten Zeichnungen erläutert werden.

Es zeigen:

Fig. 1 eine Abfüllstation mit einem zu befüllenden Kryobehälter,

Fig. 2 ein Schaltschema für die Abfüllstation von Fig. 1.

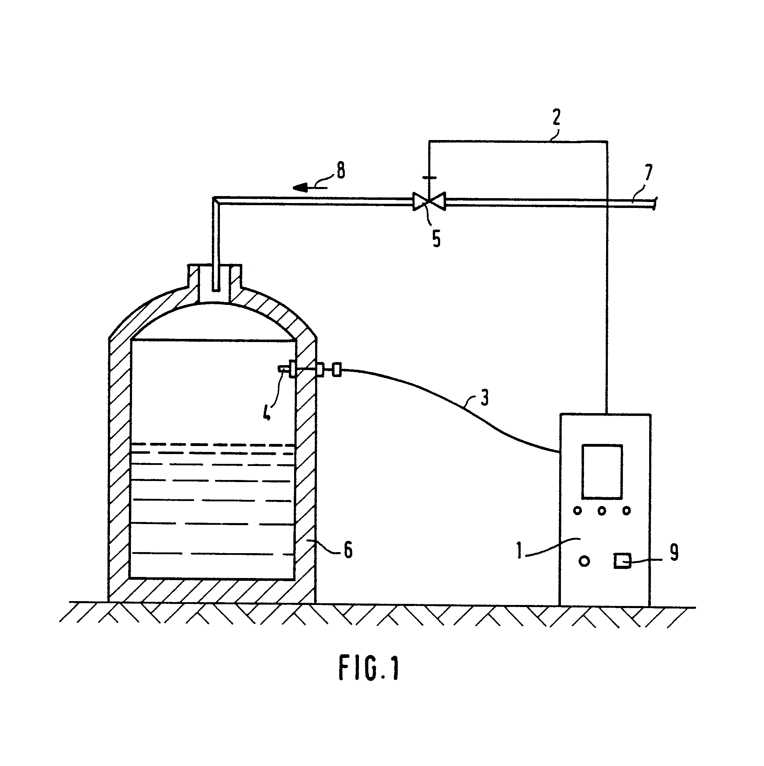

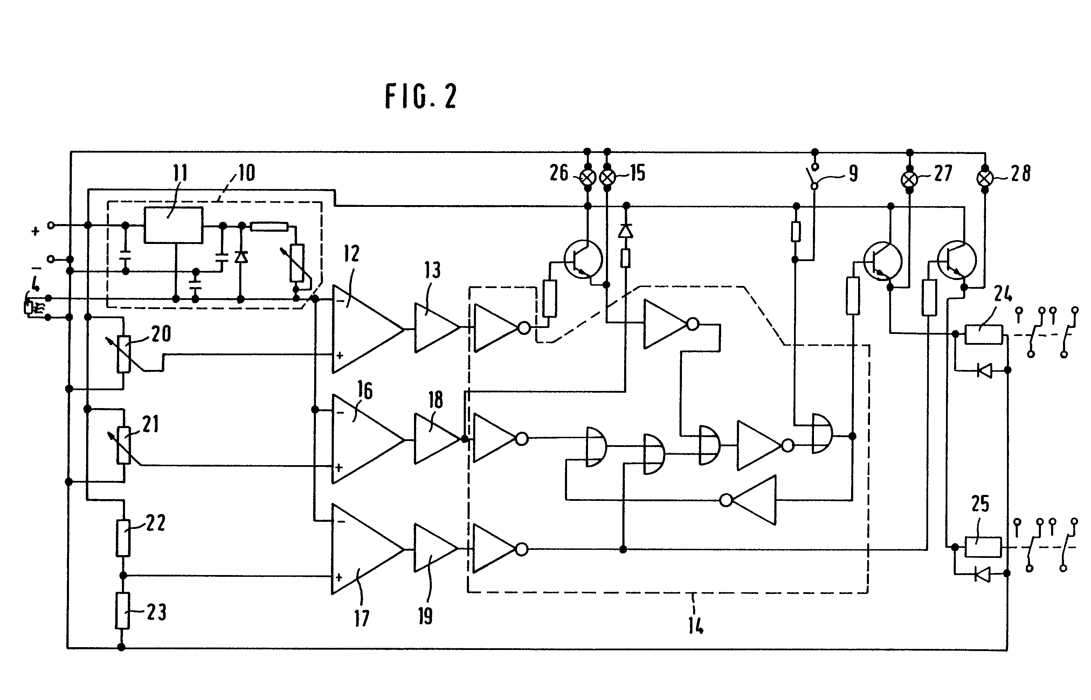

Die in Fig.1 dargestellte Abfüllstation 1 ist durch eine Leitung 2 mit einem Magnetventil 5 verbunden und durch eine Leitung 3 an den Temperaturfühler 4 angeschlossen. Der Temperaturfühler 4 befindet sich in der Höhe im Kryobehälter 6, bis zu der die kryogene Flüssigkeit aufgefüllt werden soll, in welcher also der Füllstand begrenzt werden soll. Die Zufuhr der kryogenen Flüssigkeit erfolgt durch eine isolierte Leitung 7 aus einem nicht dargestellten größeren Speicher. Die Strömungsrichtung ist durch einen Pfeil 8 angegeben. Der Abfüllvorgang wird durch Niederdrücken des Tasters 9 ausgelöst und läuft dann selbsttätig bis zum Erreichen des vorgegebenen Füllstandes ab. Das Schema einer hierzu geeigneten Schaltung ist in Fig.2 wiedergegeben.

Fig.2 zeigt einen durch eine gestrichelte Linie umgrenzten Konstantstromgeber 10 mit Spannungsregler 11, welcher einen einstellbaren Strom durch den Temperaturfühler 4 treibt. Je nach der Temperatur des Temperaturfühlers 4 ändert sich dessen Widerstand und damit die abfallende Spannung.

Durch Betätigen des Tasters 9 wird das Magnetventil 5 geöffnet und der Abfüllvorgang ausgelöst. Die kryogene Flüssigkeit strömt nun durch die isolierte Leitung 7 in den Kryobehälter 6. Das hierbei entstehende Abgas kühlt den Temperaturfühler 4 unter die Raumtemperatur ab. Der Komparator 12 ändert daraufhin sein Ausgangssignal, welches im nicht invertierenden Puffer 13 und der durch eine gestrichelte Linie dargestellten Schaltlogik 14 verarbeitet wird. Es leuchtet nunmehr die Lampe 15 auf, welche den Zustand "Selbsthaltung" anzeigt. Jetzt kann der Taster 9 losgelassen werden, ohne daß der Abfüllvorgang unterbrochen wird.

Sobald die kryogene Flüssigkeit den Temperaturfühler 4 erreicht, wird dieser auf die Siedetemperatur der Flüssigkeit heruntergekühlt, worauf der Komparator 16 sein Ausgangssignal ändert. Dies bewirkt, daß die Schaltlogik 14 den Abfüllvorgang unterbricht.

Ein Bruch in der Leitung zum Temperaturfühler 4 bewirkt, daß die Meßspannung am Komparator 17 auf das Niveau der Versorgungsspannung ansteigt. Der Komparator 17 registriert dies und unterbricht mittels der Schaltlogik 14 den Abfüllvorgang. Durch Betätigen des Tasters 9 kann dann zwar weiterhin abgefüllt werden, eine Selbsthaltung ist jedoch nicht mehr möglich und es kann daher nicht mehr automatisch abgefüllt werden.

Wesentlich ist somit, daß bei Erreichen des vorgesehenen Füllstandes der Komparator 16 sein Ausgangssignal ändert und über den nicht invertierenden Puffer 18 und die Schaltlogik 14 den Abfüllvorgang unterbricht. Die Anzeige des Zustandes "Selbsthaltung" mittels des Komparators 12 ist dagegen nicht unbedingt erforderlich, erhöht aber die Betriebssicherheit. Den gleichen Zweck erfüllt der Komparator 17 mit dem nicht invertierenden Puffer 19 und der Schaltlogik 14.

Die Widerstände 20, 21, 22 und 23 dienen zur Ausbildung der Referenzspannungen für die Komparatoren 12, 16 und 17. Das Relais 24 spricht an beim Betriebszustand Füllen, das Relais 25 beim Betriebszustand Störung. Die Lampe 26 zeigt die Betriebsbereitschaft an, die Lampe 27 zeigt an, daß gefüllt wird und die Lampe 28 leuchtet bei Störungen auf.

Falls gewünscht, können auch mehrere Temperaturfühler in verschiedener Höhe im Kryobehälter angeordnet werden, wenn diese nur teilweise bis zu einer bestimmten Höhe gefüllt werden sollen. Es wird dann jeweils der betreffende Temperaturfühler mit der Abfüllstation verbunden. Für das Befüllen eines Kryobehälters ist es nunmehr lediglich noch erforderlich, diesen an die Füllstation anzuschließen und den Füllvorgang durch Niederdrücken eines Tasters so lange auszulösen, bis die Anzeige "Selbsthaltung" aufleuchtet. Das weitere Abfüllen erfolgt selbsttätig und muß nicht überwacht werden. Sämtliche Arbeiten können von angelerntem Personal ausgeführt werden.

## Ansprüche

1. Vorrichtung zur automatischen Begrenzung des Füllstandes kryogener Flüssigkeiten bei deren Abfüllung in Kryobehälter (6),

gekennzeichnet durch einen in Höhe des gewünschten Flüssigkeitsspiegels im Kryobehälter angeordneten durch elektrischen Strom beheizbaren Temperaturfühler (4), der an eine in die Abfüllstation (1) integrierte Schalteinheit anschließbar ist, in welcher mittels eines Komparators (16) die vom Temperaturfühler erzeugte und bei dessen Eintauchen in die kryogene Flüssigkeit sich ändernde Spannung in ein Signal zum Beenden des Füllvorganges umgewandelt wird.

2. Vorrichtung nach Anspruch 1,

gekennzeichnet durch einen zweiten Komparator - (12), der ein Signal zur selbsttätigen Fortsetzung des manuell ausgelösten Abfüllvorganges erst dann abgibt, wenn der Temperaturfühler eine unter Raumtemperatur liegende Temperatur erreicht hat und eine entsprechend geänderte Spannung erzeugt.

FIG.1

FIG. 2